# EUROPÄISCHE PATENTSCHRIFT

(11) **EP 1 919 738 B1**
(45) Veröffentlichungstag und Bekanntmachung des Hinweises auf die Patenterteilung: **21.12.2011**
(21) Anmeldenummer: 07728936.1
(22) Anmeldetag: 09.05.2007
(51) Int. Cl.: B60R 21/21

(54) **AIRBAGEINRICHTUNG FÜR EIN KRAFTFAHRZEUG**
AIRBAG DEVICE FOR A MOTOR VEHICLE
DISPOSITIF D'AIRBAG POUR UN VÉHICULE AUTOMOBILE

(30) Priorität: 07.06.2006 DE 202006009205 U
(43) Veröffentlichungstag der Anmeldung: 14.05.2008
(73) Patentinhaber: Takata-Petri AG, 63743 Aschaffenburg (DE)
(72) Erfinder: WIGGER, Henning, Detroit, Michigan 48207 (US); DEBES, Michael, 63741 Aschaffenburg (DE); WOLLNY, Frank, 14199 Berlin (DE); BUCHHOLZ, Andre, 10249 Berlin (DE); KAMPFMANN, Wolfgang, 63863 Eschau (DE)
(74) Vertreter: Baumgärtel, Gunnar
(86) Internationale Anmeldenummer: PCT/EP2007/054484
(87) Internationale Veröffentlichungsnummer: WO 2007/141107

(56) Entgegenhaltungen:
- EP-A2- 0 945 312
- DE-A1- 10 316 272
- GB-A- 2 236 082
- US-A- 5 013 064

## Beschreibung

Die Erfindung betrifft eine Airbageinrichtung für ein Kraftfahrzeug nach dem Oberbegriff des Anspruchs 1.

Eine derartige Airbageinrichtung umfasst einen zum Schutz eines Fahrzeuginsassen mittels eines Gasgenerators aufblasbaren Gassack; eine Aufnahme, insbesondere in Form eines so genannten Modulgehäuses, in der der Gassack als ein gefaltetes bzw. zusammengestauchtes Gassackpaket angeordnet ist; eine Austrittsöffnung der Aufnahme (Gehäuseöffnung), durch die hindurch der Gassack beim Aufblasen mittels eines Gasgenerators sich entfalten und in den Außenraum außerhalb des Gehäuses expandieren kann; sowie weiterhin eine flexible Schutzabdeckung, die das Gassackpaket im Bereich der Austrittsöffnung überdeckt.

Die flexible Schutzabdeckung dient zum Einen zur definierten Positionierung und zum Halten des Gassackpaktes innerhalb der zugeordneten Aufnahme vor dem Aufblasen. Weiterhin kann die flexible Schutzabdeckung zur Steuerung der Entfaltung des Gassackes beim Aufblasen vorgesehen sein sowie zur Vermeidung einer Beschädigung des Gassackes während der Expansion, etwa an einer Kante der zugeordneten Aufnahme (Modulgehäuse), an Versteifungselementen, Befestigungsmitteln oder dergleichen.

Aus der DE 10 2004 023 780 A1 ist bekannt, die Schutzabdeckung durch zwei flexible, flächige Schutzelemente (z.B. in Form von Gewebelagen) zu bilden, die an einander (entlang einer definierten Richtung) gegenüberliegenden Befestigungsbereichen des Modulgehäuses befestigt sind und die über mindestens eine auftrennbare Aufreißlinie miteinander verbunden sind. Diese flexible Schutzabdeckung umgreift das Gassackpaket im Querschnitt im Wesentlichen U-artig und wird beim Aufblasen entlang der auftrennbaren Aufreißlinie in zwei separate, flexible Schutzelemente getrennt.

Eine Aufreißlinie der Schutzabdeckung ist vorliegend dadurch charakterisiert, dass sie gegenüber den beim Aufblasen des Gassackes auftretenden Belastungen (Druckkräften) weniger widerstandsfähig ist als das übrige Material, aus dem die Schutzabdeckung besteht, also als die die Schutzabdeckung bildenden Schutzelemente. Dies bedeutet, dass aufgrund der beim Entfalten des Gassackes auf die flexible Schutzabdeckung ausgeübten Druckkräfte - bei Erreichen eines bestimmten Kraft- bzw. Druckniveaus - die beiden flexiblen, flächigen Schutzelemente entlang der Aufreißlinie voneinander getrennt werden, ohne dass die flächigen Schutzelemente selbst beschädigt würden.

Durch die Führung des Gassackes beim Aufblasen mittels der mindestens zwei flexiblen, flächigen Schutzelemente, die den expandierenden Gassack jeweils an einer Seite flankieren, lässt sich eine gezielte Entfaltung und Expansion des Gassackes entlang einer definierten Richtung hin zu einem zu schützenden Insassen (z. B. Beifahrer) sicherstellen, während (zumindest im Anfangsstadium der Expansion) eine Ausdehnung entlang anderer Richtungen, die eine Gefährdung eines zu schützenden Insassen zur Folge haben könnte, verhindert wird. Dies ist insbesondere im Fall so genannter oop-Positionen vorteilhaft, in denen sich der zu schützende Insasse außerhalb der Normalposition sehr nahe bei dem entsprechenden Airbagmodul befindet.

Eine solche Airbageinrichtung eignet sich z.B. zur Verwendung als Beifahrerairbagmodul, das hinter der Instrumententafel eines Kraftfahrzeugs angeordnet ist.

In der DE 103 16 272 A1 wird eine Airbageinrichtung für ein Kraftfahrzeug beschrieben, bei der eine Schutzabdeckung ein Gassackpaket im Bereich einer Austrittsöffnung überdeckt. Bei der Expansion des Gassacks reißt eine Sollbruchstelle der Schutzabdeckung auf und schwenkt klappenartig nach oben, um die Austrittsöffnung für den Gassack freizugeben. Zum Schutz des Gassacks vor einem direkten Kontakt zwischen dem Gassack und einer scharfen Bruchkante, die entlang der vormaligen Sollbruchstelle verläuft, legt sich eine flexible Schutzeinrichtung zwischen den Gassack und die scharfe Bruchkante.

Ein weiterer ähnlicher Airbag ist aus der US 5013064 bekannt.

Der Erfindung liegt das Problem zugrunde, eine Airbageinrichtung der eingangsgenannten Art weiter zu verbessern.

Dieses Problem wird erfindungsgemäß durch die Merkmale des Anspruchs 1 gelöst.

Danach ist bei einer Airbageinrichtung der eingangsgenannten Art weiterhin vorgesehen, dass zwischen der Schutzabdeckung und dem hiervon überdeckten, als Gassackpaket in einer Aufnahme verstauten Gassack eine flexible Führungslage, z. B. in Form einer Folien- oder Gewebelage, angeordnet ist, die mit einem (ersten) der flächigen Schutzelemente entlang einer Verbindungslinie, die sich entlang der Aufreißlinie erstreckt, über die die beiden flächigen Schutzelemente miteinander in Verbindung stehen, dauerhaft verbunden ist, so dass dieses beim Aufblasen des Gassackes zusammen mit jener flexiblen Führungslage eine den Gassack flankierende Verbundlage bildet.

Unter einer dauerhaften Verbindung der Führungslage mit dem ersten flächigen Schutzelement wird dabei einer Verbindung verstanden, die auch dann erhalten bleibt, wenn beim Aufblasen und Entfalten des Gassackes die beiden Schutzelemente der Schutzabdeckung entlang der Aufreißlinie voneinander getrennt werden.

Die erfindungsgemäße Lösung hat den Vorteil, dass die aus einem ersten der die Schutzabdeckung bildenden flexiblen, flächigen Schutzelemente sowie einer zusätzlichen Führungslage gebildete Verbundlage eine größere Ausdehnung aufweist als das bloße Schutzelement für sich betrachtet. Hierdurch können entsprechend größere Hindernisse, wie zum Beispiel der Kopf eines sich zu nahe beim Airbagmodul befindlichen Fahrzeuginsassen, während des Aufblasens, Entfaltens und Expandierens des Gassackes überdeckt werden, so dass der sich entfaltende Gassack bei seiner Expansion entlang jener Verbundlage gleitet ohne in unmittelbaren Kontakt mit dem besagten Hindernis, also etwa den Kopf eines Fahrzeuginsassen, zu geraten.

In dem die Verbundlage als ein Reibungsminderer wirkt, also beim Zusammenwirken mit der Hülle des sich entfaltenden Gassackes einen geringen Reibkoeffizienten aufweist, gleitet der Gassack mit einer deutlich reduzierten Belastung des Nackens des entsprechenden Fahrzeuginsassen entlang jener Verbundlage - verglichen mit der Belastung, die bei einem unmittelbaren Kontakt zwischen dem Gassack und dem Kopf eines Fahrzeuginsassen aufträte. Hierzu liegt der Reibwert, der das Verhältnis von Reibungswiderstand (Reibungskraft) zur Normalkraft (senkrecht zur Bewegungsrichtung des Gassackes entlang der Verbundlage auf die Materialpaarung Gassack-Verbundlage wirkende Kraft) der Materialpaarung Gassack-Verbundlage charakterisiert, bevorzugt unterhalb 0.1. Dies kann beispielsweise durch eine Beschichtung der dem Gassack zugewandten Oberfläche der Verbundlage, etwa mit einer Gleitschicht (entsprechend einer mehrschichtigen Ausbildung der Verbundlage) erreicht werden, oder die Verbundlage wird komplett aus einem Material hergestellt, welches entsprechende Eigenschaften aufweist (einschichtige Ausbildung der Verbundlage).

Bei der erfindungsgemäßen Lösung ist weiterhin von Vorteil, dass die Verwendung einer zusätzlichen Führungslage zur Bildung der vergrößerten, flexiblen Verbundlage keinen Eingriff in den Faltprozess des Gassackes erfordert, da die Führungslage zwischen dem Gassack und der zugeordneten Schutzabdeckung liegt. Vielmehr kann der Gassack als ein wie üblich vorgefaltetes bzw. zusammengestauchtes Gassackpaket in eine hierfür vorgesehenen Aufnahme, also etwa in ein Modulgehäuse, eingefügt und von- der Schutzabdeckung überdeckt werden, wobei mit jener bereits die Führungslage fest verbunden ist, so dass sie automatisch zwischen dem Gassackpaket und der Schutzabdeckung positioniert wird.

Die (mindestens) zwei flexiblen, flächigen Schutzelemente der Schutzabdeckung sind bevorzugt an einander im Wesentlichen gegenüberliegenden Befestigungsabschnitten der Aufnahme des Gassackes festgelegt, und zwar beispielsweise durch Kleben. Wichtig ist, dass die flächigen Schutzelemente derart an der Aufnahme festgelegt sind, dass sie bei den während des Entfaltens und Expandierens des Gassackes auftretenden Kräften, die zu einem Trennen der Schutzabdeckung entlang der Aufreißlinie führen, mit dem jeweils zugeordneten Befestigungsabschnitt der Aufnahme verbunden bleiben.

Nachdem die Schutzabdeckung beim Aufblasen und Expandieren des Gassackes entlang der mindestens einen Aufreißlinie in separate, flächige Schutzelemente getrennt worden ist, flankieren diese den sich weiter entfaltenden Gassack an jeweils einer Seite, wobei ein erstes der flächigen Schutzelemente zusammen mit der dauerhaft hiermit verbundenen Führungslage eine vergrößerte Verbundlage bildet, entlang der die Hülle des sich entfaltenden Gassackes bei der Expansion gleiten kann.

Die Führungslage ist zur Bildung einer definierten, vergrößerten Verbundlage bevorzugt über einen ersten Endabschnitt dauerhaft mit dem ersten flächigen Schutzelement verbunden, und zwar insbesondere benachbart zu der Aufreißlinie der Schutzabdeckung.

Zusätzlich ist die Führungslage über einen Fixierabschnitt lösbar in der Aufnahme fixiert, wobei jener Fixierabschnitt durch einen zweiten Endabschnitt der Führungslage gebildet wird, der von dem zur dauerhaften Verbindung mit der Schutzabdeckung vorgesehenen ersten Endabschnitt beabstandet ist. Die lösbare Fixierung der Führungslage erfolgt vorteilhaft ebenfalls an der Schutzabdeckung, und zwar an einem zweiten flächigen Schutzelement, welches von dem ersten flächigen Schutzelement, mit dem die Führungslage dauerhaft verbunden wird, verschieden ist.

Die lösbare Fixierung der Führungslage innerhalb der Aufnahme ist derart, dass diese beim Aufblasen und Expandieren des Gassackes gelöst wird und der Fixierabschnitt anschließend ein freies Ende der den Gassack flankierenden Verbundlage bildet, wobei das Lösen des Fixierabschnittes bevorzugt erst nach dem Trennen der beiden flächigen Schutzelemente entlang der Aufreißlinie der Schutzabdeckung erfolgt.

Zur lösbaren Fixierung der Führungslage können beispielsweise aufreißbare Fixierungsmittel, wie eine Reißnaht oder ein Klebemittel mit begrenzter Haftwirkung, vorgesehen sein. Weiterhin kann es sich um eine formschlüssige Fixierung handeln die durch die beim Entfalten des Gassackes auftretenden Kräfte gelöst wird, etwa in Form mindestens einer Lasche, die einen zugeordneten Schlitz durchgreift. Hierbei kann die Lasche einerseits kraftschlüssig (mit begrenzter, zerstörungsfrei überwindbarer Kraft) in der Position gehalten werden, in der sie den Schlitz durchgreift, oder die Lasche kann eine Verbreiterung aufweisen, mit der sie den Schlitz hintergreift.

Die Führungslage ist bevorzugt derart mit einem ersten flächigen Schutzelement der Schutzabdeckung dauerhaft verbunden, dass die beim Aufblasen und Expandieren des Gassackes hierdurch gebildete, den sich entfaltenden Gassack flankierende Verbundlage einem durch den Gassack zu schützenden Insassen zugewandt ist, so dass sich der Lappen über ein Körperteil, wie zum Beispiel den Kopf jenes Insassen, legen kann, wenn dieses beim Auslösen der Airbageinrichtung, zum Beispiel in einem Crash-Fall, zu dicht beim sich entfaltenden Gassack liegt.

Um auch die Verwendung besonders ausgedehnter Führungslagen zur Bildung entsprechend großer, hieraus resultierender Verbundlagen zu erreichen, kann die Führungslage zwischen dem Gassack und der Schutzabdeckung in Falten gelegt sein.

Die Aufreißlinie der Schutzabdeckung, entlang der die mindestens zwei flexiblen, flächigen Schutzelemente beim Aufblasen und Expandieren des Gassackes voneinander getrennt werden, kann einerseits durch eine Materialschwächung der Schutzabdeckung, wie zum Beispiel eine Perforation, gebildet werden oder andererseits durch eine auftrennbare Verbindung zwischen den beiden flächigen Schutzelementen, wie zum Beispiel eine Reißnaht.

Die dauerhafte Verbindung zwischen einem ersten flächigen Schutzelement der Schutzabdeckung und der Führungslage ist bevorzugt stoffschlüssig und kann etwa durch Kleben oder Schweißen erfolgen. Die Verbindung kann jedoch auch über eine Naht hergestellt sein.

Weitere Einzelheiten und Vorteile der Erfindung werden bei der nachfolgenden Beschreibung von Ausführungsbeispielen anhand der Figuren deutlich werden.

Es zeigen:
- Fig. 1a: eine schematische Seitenansicht einer Airbageinrichtung in Form eines Beifahrer-Airbagmodules mit einem durch eine Schutzabdeckung verschlossenen Modulgehäuse;
- Fig.: 1b eine Draufsicht auf die Anordnung aus Figur 1a;
- Fig. 2: die Anordnung aus Figur 1a beim Aufblasen und Expandieren eines im Modulgehäuse aufgenommenen Gassackes;
- Fig. 3: die Anordnung aus Figur 1a, angeordnet auf der Beifahrerseite eines Kraftfahrzeugs, zusammen mit einem zu schützenden Fahrzeuginsassen bei bereits weitgehend aufgeblasenem Gassack;
- Fig. 4: eine Abwandlung der Anordnung aus Figur 1 b.

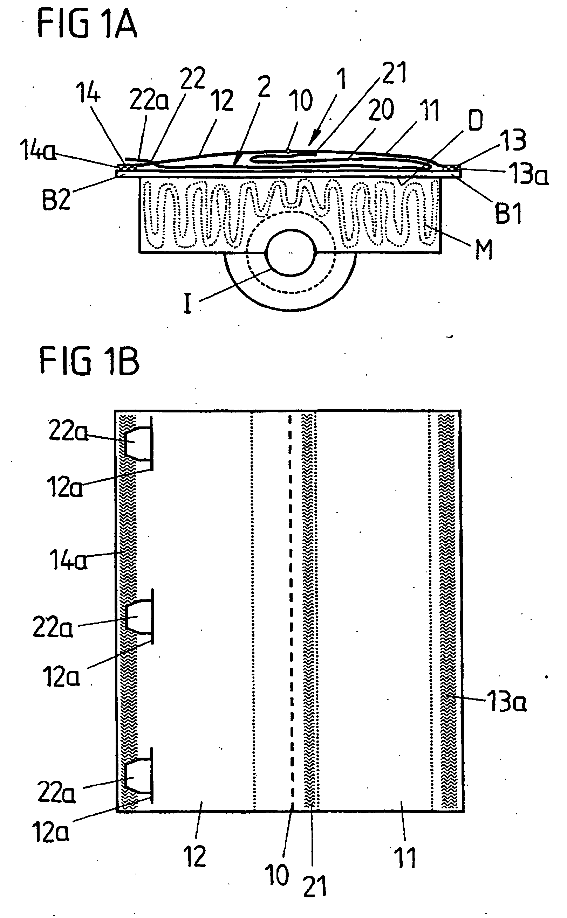

In den Figuren 1a und 1b ist schematisch eine Airbageinrichtung in Form eines Beifahrer-Airbagmodules in einer Seitenansicht (Figur 1a) sowie in einer Draufsicht (Figur 1b) dargestellt.

Das Airbagmodul umfasst eine Aufnahme in Form eines Modulgehäuses M, in dem ein zu einem Gassackpaket zusammengefalteter Gassack G angeordnet ist, sowie einen Gasgenerator (Inflator I) zum Aufblasen des Gassackes G. An seiner dem Gasgenerator I abgewandten Seite weist das Modulgehäuse M eine freie Deckfläche D auf, die eine Austrittsöffnung (Gehäuseöffnung) für den sich beim Aufblasen mittels des Gasgenerators I entfaltenden und expandierenden Gassack bildet. Die Austrittsöffnung ist mittels einer flexiblen Schutzabdeckung 1 überdeckt und verschlossen, welche an zwei einander gegenüberliegenden Abschnitten 13, 14 jeweils durch ein Klebemittel 13a, 14a an einem Befestigungsabschnitt B1, B2 des Modulgehäuses M festgelegt ist.

Etwa im mittleren Bereich zwischen den beiden Befestigungsabschnitten B1, B2 verläuft entlang der flexiblen Schutzabdeckung 1 eine durch eine Perforation gebildete Aufreißlinie 10, die die flexible Schutzabdeckung 1 in zwei flexible, flächige Schutzelement 11, 12 in Form von Folienlagen teilt.

An der ersten Folienlage 11 ist unmittelbar benachbart zu der Aufreißlinie 10 eine ebenfalls durch eine Folienlage gebildete flächige, flexible Führungslage 2 mit einem Endabschnitt 21 (Verbindungsabschnitt) derart dauerhaft (z.B. durch Kleben oder Schweißen) verbunden, dass sich die zugehörige Verbindungslinie (an der die Führungslage 2 mit dem ersten flächigen Schutzelement 11 verbunden ist) entlang der Aufreißlinie 10 erstreckt.

An ihrem anderen Endabschnitt 22 (Fixierabschnitt) ist die Führungslage 2 mittels Laschen 22a, welche zugeordnete Schlitze 12a des zweiten flexiblen, flächigen Führungselementes 12 durchgreifen, lösbar an jenem fixiert. Die Laschen 22a werden dabei mittels Klemmkräften in einer Position gehalten, in der sie den jeweils zugeordneten Schlitz 12a durchgreifen. Hierzu kann vorgesehen sein, dass bei der Montage des Moduls dieses mit dem Laschenbereich gegen ein in der Instrumententafel eines Kraftfahrzeugs angeordnetes Element gedrückt wird. Alternativ dazu könnte eine zusätzliche Klemmleiste vorgesehen sein, die mit dem Gehäuse verschraubt wird und dabei auf die Laschen 22a drückt.

In dem mittleren Abschnitt 20 zwischen den beiden Endabschnitten 21, 22 ist die Führungslage 2 in Falten gelegt und erstreckt sich zwischen dem als Gassackpaket im Modulgehäuse M verstauten Gassack G und der das Modulgehäuse M verschließenden Schutzabdeckung 1.

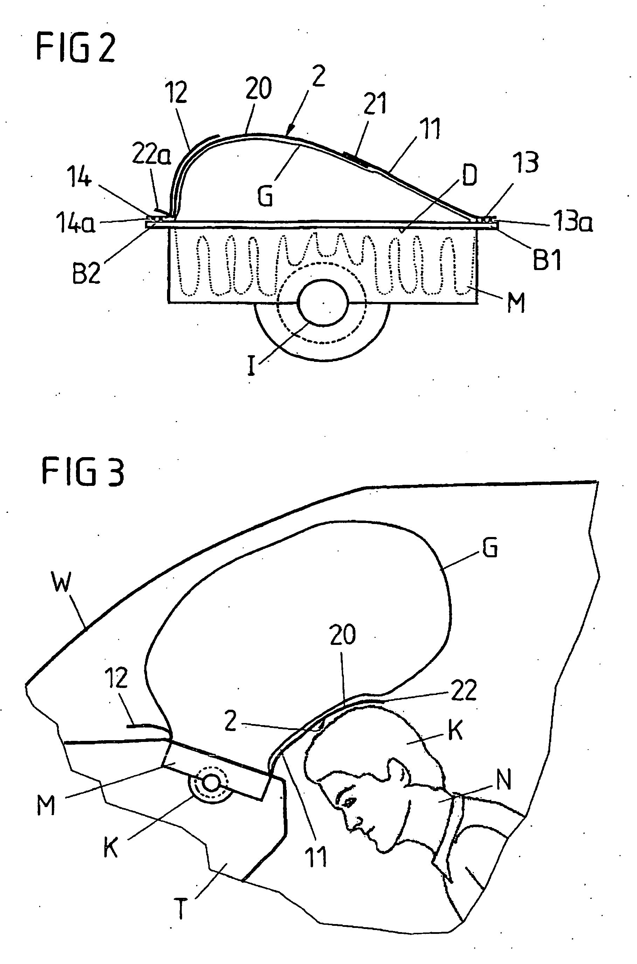

Figur 2 zeigt die Airbageinrichtung (Beifahrerairbagmodul) aus den Figuren 1a und 1b in einer Seitenansicht gemäß Figur 1a am Beginn eines Aufblasens und Entfaltens des Gassackes G, ausgelöst durch einen Crash-Fall, bei dem der Gasgenerator I gezündet wurde, so dass dieser Gase zum Befüllen des Gassackes G freisetzt.

Der Gassack G entfaltet sich beim Aufblasen und expandiert durch die an der freien Deckfläche D gebildete Austrittsöffnung des Modulgehäuses M hindurch, wobei er mit seiner Hülle auf die Schutzabdeckung 1 und die Führungslage 2 einwirkt. Aufgrund der hiermit verbunden Druckkräfte wird die flexible Schutzabdeckung 1 entlang der Aufreißlinie 10 in zwei separate flexible, flächige Schutzelemente 11, 12 (in Form von Folienlagen) aufgetrennt, die den sich entfaltenden und expandierenden Gassack G an jeweils einer Seite (benachbart dem jeweiligen Befestigungsabschnitt B1, B2 am Modulgehäuse M) flankieren.

Die flexible Führungslage 2 ist zu diesem Zeitpunkt einerseits mit ihrem ersten Endabschnitt 21 (Verbindungsabschnitt) mit dem ersten flächigen Schutzelement 11 (benachbart zur Aufreißlinie 10) dauerhaft verbunden sowie andererseits mit ihrem zweiten Endabschnitt 22 (Fixierungsabschnitt) über Befestigungslaschen 22a noch lösbar am zweiten flächigen Schutzelement 12 (im Bereich des zugehörigen Befestigungsabschnittes B2) fixiert.

Beim weiteren Aufblasen des Gassackes G schlagen die beiden flexiblen, flächigen Schutzelemente 11, 12 zunehmend nach Außen um, wobei die zugehörigen Befestigungsabschnitte B1, B2 am Modulgehäuse M jeweils eine Scharnierlinie bilden und wobei der Gassack G zunächst von dem ersten flächigen Schutzelement 11 zusammen mit der hieran dauerhaft verbundenen (inzwischen entfalteten) Führungslage 2 überdeckt ist.

Es ist erkennbar, dass die durch das erste flexible, flächige Führungselement 11 sowie die hiermit dauerhaft verbundene Führungslage 2 gebildete Verbundlage eine deutlich größere Ausdehnung aufweist als das zweite flächige Schutzelement .12 für sich betrachtet (welches im Wesentlichen von gleicher Größe ist wie das erste flächige Schutzelement 11 für sich betrachtet).

Figur 3 zeigt die Airbageinrichtung aus den Figuren 1a, 1b und 2 - als Beifahrerairbagmodul eingebaut in ein Kraftfahrzeug - in einem Zustand, in dem sich der Gassack G bereits weitgehend aus dem in einer Armaturentafel T des Kraftfahrzeugs angeordneten Modulgehäuse M heraus entfaltet hat, so dass er zwischen der Windschutzscheibe W und einem zu schützenden Fahrzeuginsassen positioniert ist. Die Anordnung ist dabei derart, dass die aus dem ersten flächigen Schutzelement 11 und der Führungslage 2 gebildete Verbundlage den Gassack G auf der dem zu schützenden Fahrzeuginsassen zugewandten Seite flankiert, während das zweite flächige Schutzelement 12 den Gassack G auf der der Windschutzscheibe zugewandten Seite flankiert.

Dabei hat sich zwischenzeitlich durch die beim Entfalten und Expandieren des Gassackes G wirkenden Kräfte die Fixierung des zweiten Endabschnittes 22 der Führungslage 2 an dem zweiten flexiblen Schutzelement 12 gelöst, indem die Klemmkräfte, welche die Laschen 22a in den zugeordneten Schlitzen 12a hielten, überwunden wurden. Der zweite Endabschnitt 22 der Führungslage 2 bildet dann einen freien Endabschnitt der aus dem ersten flächigen Schutzelement 11 und der Führungslage 2 gebildeten Verbundlage.

Vorliegend ist der zu schützende Fahrzeuginsasse (Beifahrer) konkret in einer Position gezeigt, in der sich dessen Kopf K - abweichend von der Normalposition eines Fahrzeuginsassen - zu dicht bei dem Airbagmodul, insbesondere bei dem sich aus dem Modulgehäuse M hinaus entfaltenden Gassack G, befindet. Hierdurch besteht eine erhöhtes Risiko, dass es zu Verletzungen im Nackenbereich N des Fahrzeuginsassen kommen kann, wenn der expandierende Gassack G beim Aufblasen und Entfalten mit seiner Hülle entlang des Kopfes K des Fahrzeugsinsassen reibt, wobei entsprechend große Kräfte im Nackenbereich N des Fahrzeuginsassen wirken.

Dies wird vorliegend dadurch verhindert, dass sich zwischen der Hülle des Gassackes G und dem Kopf des Fahrzeuginsassen die durch das erste flexible Schutzelement 11 und die Führungslage 2 gebildete Verbundlage erstreckt. Die durch das erste flächige Schutzelement 11 und die Führungslage 2 gebildete Verbundlage überdeckt den Kopf K des Fahrzeuginsassen in seinen dem Gassack G zugewandten Bereichen und bildet eine Gleitfläche, entlang der der Gassack G beim Entfalten und Expandieren gleiten kann, ohne dass des Hülle in unmittelbaren Kontakt mit dem Kopf K des Fahrzeuginsassen tritt. In dem die der Hülle des Gassackes G zugewandte Oberfläche der Verbundlage 2, 11 so beschichtet ist, dass der expandierende Gassack mit möglichst wenig Reibung entlang der Verbundlage 2, 11 gleiten kann, wird die Belastung des Nackenbereiches N des Kraftfahrzeuginsassen erheblich reduziert und somit die Gefahr von Verletzungen entsprechend reduziert. Die Verbundlage 2, 11 kann sich dabei ggf. am zu überdeckenden Hindernis; zum Beispiel am Kopf K eines Fahrzeuginsassen, abstützen.

Die Ausdehnung der Führungslage 2 ist jeweils so zu wählen, dass die aus der Führungslage 2 und dem ersten flächigen Schutzelement 11 gebildete Verbundlage 2, 11 die beim Entfalten des Gassackes G auf seiner dem Fahrzeuginnenraum (dem zu schützenden Fahrzeuginsassen) zugewandten Seite möglicherweise auftretenden Hindernisse überdecken kann und ein unmittelbarer Kontakt des entsprechenden Hindernisses mit der Hülle des Gassackes G vermieden wird. Hierzu wird die Führungslage 2 gegebenenfalls, wie in Figur 1a dargestellt, in eine entsprechende Anzahl Falten gelegt, um sie zwischen dem als Gassackpaket vorliegenden Gassack G und der flexiblen Schutzabdeckung, unterbringen zu können.

Sollte das für die Führungslage 2 sowie das erste flexible Schutzelement 11 verwendete Material keine hinreichend guten Gleiteigenschaften aufweisen, um den gewünschten geringen Reibwert beim Zusammenwirken des expandierenden Gassackes G mit der Verbundlage 2, 11 zu gewährleisten, so kann die Verbundlage 2, 11 auf der dem expandierenden Gassack G zugewandten Oberfläche eine Beschichtung aufweisen, die eine verbesserte Gleitfähigkeit (mit möglichst geringem Reibwert) sicherstellt.

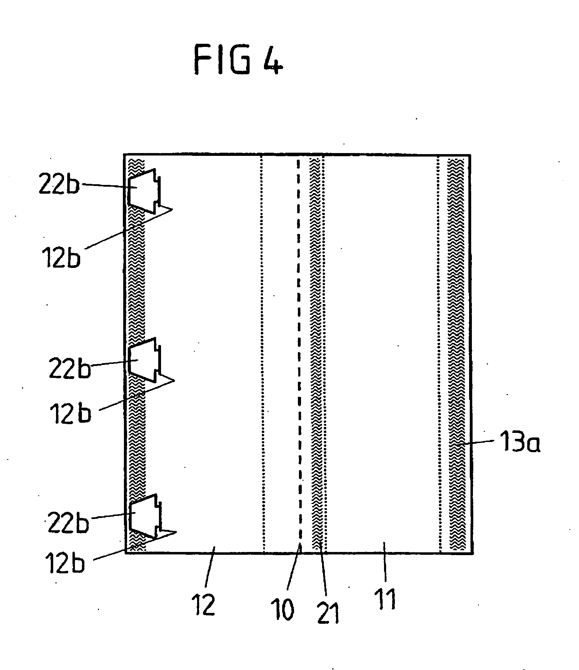

Figur 4 zeigt in einer Draufsicht eine Abwandlung der Airbageinrichtung aus den Figuren 1a und 1b, wobei der Unterschied in der lösbaren Fixierung des zweiten Endabschnittes 22 (Fixierabschnitt) der Führungslage 2 an dem zweiten flächigen Schutzelement 12 im Bereich des zugeordneten Befestigungsabschnittes B2 des Modulgehäuses M (vergleiche Figur 1a) besteht. Hierzu dienen gemäß Figur 4 am zweiten Endabschnitt 22 der Führungslage 2 vorgesehene Laschen 22b, welche eine Verbreiterung aufweisen, so dass sie die zugeordneten Schlitze 12 b des zweiten flächigen Schutzelementes 12 an deren Rändern hintergreifen. Diese Fixierung wird gelöst, wenn die durch den sich entfaltenden und expandieren Gassack auf die Führungslage 2 ausgeübten Druckkräfte groß genug sind, um die verbreiterten Laschen 12b unter entsprechender Deformation durch die zugeordneten Schlitze 12b des zweiten flächigen Schutzelementes 12 hindurchzuziehen. Der Zeitpunkt, zu dem jene Fixierung beim Aufblasen des Gassackes G gelöst wird, hängt davon ab, welche Kräfte erforderlich sind, um die formschlüssige Verbindung zwischen den Laschen 22b und den zugeordneten Schlitzen 12b aufzulösen, also die verbreiterten Laschen 22b durch die Schlitze 12b hindurchzuziehen. Jene hängen wiederum maßgeblich vom Verhältnis der Breite der Laschen 22b zur Ausdehnung der Schlitze der 12b entlang der Richtung der Breite der Laschen 22b ab. Der Zeitpunkt des Lösens der Fixierung des zweiten Endabschnittes 22 der Führungslage 2 lässt sich somit durch Wahl der geometrischen Verhältnisse der Laschen 22b und Schlitze 12b gezielt einstellten.

## Patentansprüche

1. Airbageinrichtung für ein Kraftfahrzeug mit
- einem zum Schutz eines Fahrzeuginsassen aufblasbaren Gassack (G),
- einer Aufnahme (M), in der der Gassack (G) als Gassackpaket angeordnet ist und die eine Austrittsöffnung aufweist, durch die hindurch der Gassack (G) beim Aufblasen aus der Aufnahme (M) austreten und expandieren kann, und
- einer flexiblen Schutzabdeckung (1), die das Gassackpaket im Bereich der Austrittsöffnung überdeckt, wobei
- die Schutzabdeckung (1) mindestens zwei flexible, flächige Schutzelemente (11, 12) umfasst, die jeweils an der Aufnahme (M) festgelegt sind, die über mindestens eine auftrennbare Aufreißlinie (10) miteinander in Verbindung stehen und die den Gassack (G) beim Aufblasen zumindest während eines ersten Zeitabschnittes der Expansion des Gassackes flankieren,
- zwischen der Schutzabdeckung (1) und dem als Gassackpaket vorgesehenen Gassack (G) eine flexible Führungslage (2) angeordnet ist, die mit einem ersten der flächigen Schutzelemente (11, 12) dauerhaft verbunden ist, und wobei
- das erste flächige Schutzelement (11) beim Aufblasen des Gassackes (G) zusammen mit der Führungslage (2) eine den Gassack (G) flankierende Verbundlage (2, 11) bildet,
**dadurch gekennzeichnet, dass**
die Führungslage (2) entlang einer Verbindungslinie, die sich entlang der Aufreißlinie (10) erstreckt, dauerhaft mit dem ersten flächigen Schutzelement (11) verbunden ist, so dass die Verbundlage (2, 11) beim Aufblasen des Gassacks eine größere Flächenausdehnung aufweist als das erste flächige Schutzelement (11) für sich genommen.

2. Airbageinrichtung nach Anspruch 1, **dadurch gekennzeichnet, dass** die flächigen Schutzelemente (11, 12) an einander im Wesentlichen gegenüber liegenden Befestigungsabschnitten (B1, B2) der Aufnahme (M) festgelegt sind.

3. Airbageinrichtung nach Anspruch 1 oder 2, **dadurch gekennzeichnet, dass** die flächigen Schutzelemente (11, 12) am jeweils zugeordneten Befestigungsabschnitt (B1, B2) der Aufnahme (M) durch ein Klebemittel (13a, 14a) festgelegt sind.

4. Airbageinrichtung nach einem der vorhergehenden Ansprüche, **dadurch gekennzeichnet, dass** die mindestens eine Aufreißlinie (10) der Schutzabdeckung (1) so ausgebildet ist, dass die Schutzabdeckung (1) beim Aufblasen und Expandieren des Gassackes (G) entlang der einen Aufreißlinie (10) in separate flächige Schutzelemente (11, 12) getrennt wird, die jeweils den Gassack (G) beim Expandieren flankieren.

5. Airbageinrichtung nach einem der vorhergehenden Ansprüche, **dadurch gekennzeichnet, dass** die Führungslage (2) an einem ersten Endabschnitt (21) dauerhaft mit dem ersten flächigen Schutzelement (11) verbunden ist.

6. Airbageinrichtung nach einem der vorhergehenden Ansprüche, **dadurch gekennzeichnet, dass** die Führungslage (2) benachbart zur Aufreißlinie (10) dauerhaft mit dem ersten flächigen Schutzelement (11) verbunden ist.

7. Airbageinrichtung nach einem der vorhergehenden Ansprüche, **dadurch gekennzeichnet, dass** die Führungslage (2) zusätzlich über einen Fixierabschnitt (22) lösbar in der Aufnahme (M) fixiert ist.

8. Airbageinrichtung nach Anspruch 7, **dadurch gekennzeichnet, dass** der Fixierabschnitt (22) durch einen zweiten Endabschnitt der Führungslage (2) gebildet wird.

9. Airbageinrichtung nach Anspruch 7 oder 8, **dadurch gekennzeichnet, dass** die zusätzliche lösbare Fixierung der Führungslage (2) an der Schutzabdeckung (1) vorgesehen ist.

10. Airbageinrichtung nach Anspruch 9, **dadurch gekennzeichnet, dass** die zusätzliche lösbare Fixierung der Führungslage (2) an einem zweiten flächigen Schutzelement (12) der Schutzabdeckung (1) vorgesehen ist, mit dem die Führungslage (2) nicht dauerhaft verbunden ist.

11. Airbageinrichtung nach einem der Ansprüche 7 bis 10, **dadurch gekennzeichnet, dass** der Fixierabschnitt (22), über den die Führungslage (2) lösbar in der Aufnahme (M) fixiert ist, von dem Verbindungsabschnitt (21) beabstandet ist, über den die Führungslage (2) dauerhaft mit dem ersten flächigen Schutzelement (11) der Schutzabdeckung (1) verbunden ist.

12. Airbageinrichtung nach einem der Ansprüche 7 bis 11, **gekennzeichnet durch** eine derartige lösbare Fixierung des Fixierabschnittes (22) der Führungslage (2) in der Aufnahme (M), dass der Fixierabschnitt (22) sich beim Aufblasen und Expandieren des Gassackes (G) löst und ein freies Ende der den Gassack (G) flankierenden Verbundlage (2, 11) bildet.

13. Airbageinrichtung nach Anspruch 4 und 12, **gekennzeichnet durch** eine derartige Ausbildung der lösbaren Fixierung der Führungslage (2), dass sich der Fixierabschnitt (22) in der Aufnahme (M) erst löst, wenn die beiden flächigen Schutzelemente (11, 12) bereits entlang der Aufreißlinie (10) der Schutzabdeckung (1) voneinander getrennt worden sind.

14. Airbageinrichtung nach einem der Ansprüche 7 bis 13, **dadurch gekennzeichnet, dass** zur lösbaren Fixierung der Führungslage (2) aufreißbare Fixierungsmittel vorgesehen sind.

15. Airbageinrichtung nach Anspruch 14, **dadurch gekennzeichnet, dass** die aufreißbaren Fixierungsmittel durch eine Reißnaht gebildet werden.

16. Airbageinrichtung nach Anspruch 14, **dadurch gekennzeichnet, dass** die aufreißbaren Fixierungsmittel durch ein Klebemittel gebildet werden.

17. Airbageinrichtung nach einem der Ansprüche 7 bis 13, **dadurch gekennzeichnet, dass** zur lösbaren Fixierung der Führungslage (2) formschlüssige Fixierungsmittel (12a, 22a; 12b, 22b) vorgesehen sind.

18. Airbageinrichtung nach Anspruch 17, **dadurch gekennzeichnet, dass** die Fixierungsmittel mindestens eine einen Schlitz (12a, 12b) durchgreifende Lasche (22a, 22b) umfassen.

19. Airbageinrichtung nach Anspruch 18, **dadurch gekennzeichnet, dass** die Lasche (22a) kraftschlüssig in einer Position gehalten wird, in der sie den zugeordneten Schlitz (12a) durchgreift.

20. Airbageinrichtung nach Anspruch 18, **dadurch gekennzeichnet, dass** die Lasche (22b) eine Verbreitung aufweist, mit der sie den zugeordneten Schlitz (12b) an seinem Rand formschlüssig hintergreift.

21. Airbageinrichtung nach einem der vorhergehenden Ansprüche, **dadurch gekennzeichnet, dass** die Führungslage (2) derart mit dem ersten flächigen Schutzelement (11) dauerhaft verbunden ist, dass die hierdurch gebildete, den Gassack (G) beim Aufblasen und Expandieren flankierende Verbundlage (2, 11) einem durch den Gassack (G) zu schützenden Insassen zugewandt ist.

22. Airbageinrichtung nach Anspruch 21, **dadurch gekennzeichnet, dass** sich die Verbundlage (2, 11) über ein Körperteil (K) des zu schützenden Insassen legen kann, das beim Aufblasen des Gassackes (G) dicht bei der Hülle des Gassackes (G) liegt.

23. Airbageinrichtung nach einem der vorhergehenden Ansprüche, **dadurch gekennzeichnet, dass** die Verbundlage (2, 11) komplett aus einem Material ausgebildet ist.

24. Airbageinrichtung nach einem der vorhergehenden Ansprüche, **dadurch gekennzeichnet, dass** die Verbundlage (2, 11) auf ihrer dem Gassack (G) zugewandten Oberfläche eine reibungsreduzierende Beschichtung aufweist.

25. Airbageinrichtung nach einem der vorhergehenden Ansprüche, **dadurch gekennzeichnet, dass** die dem Gassack (G) zugewandte Oberfläche der Verbundlage (2, 11) beim Zusammenwirken mit der Hülle des Gassackes (G) einen Reibwert kleiner 0.1 aufweist.

26. Airbageinrichtung nach einem der vorhergehenden Ansprüche, **dadurch gekennzeichnet, dass** der Gassack (G) beim Entfalten und Expandieren mit seiner Hülle entlang der Verbundlage (2, 11) gleitet.

27. Airbageinrichtung nach einem der vorhergehenden Ansprüche, **dadurch gekennzeichnet, dass** die Führungslage (2) zwischen dem als Gassackpaket vorgesehenen Gassack (G) und der Schutzabdeckung (1) in Falten gelegt ist.

28. Airbageinrichtung nach einem der vorhergehenden Ansprüche, **dadurch gekennzeichnet, dass** die Aufreißlinie (10) durch eine Materialschwächung der Schutzabdeckung (1) gebildet ist.

29. Airbageinrichtung nach Anspruch 28, **dadurch gekennzeichnet, dass** die Aufreißlinie (10) durch eine Perforation der Schutzabdeckung (1) gebildet ist.

30. Airbageinrichtung nach einem der Ansprüche 1 bis 27, **dadurch gekennzeichnet, dass** die Aufreißlinie (10) durch eine auftrennbare Verbindung der flächigen Schutzelemente (11, 12) gebildet ist.

31. Airbageinrichtung nach Anspruch 30, **dadurch gekennzeichnet, dass** die Aufreißlinie (10) durch eine Reißnaht gebildet ist.

32. Airbageinrichtung nach einem der vorhergehenden Ansprüche, **dadurch gekennzeichnet, dass** die dauerhafte Verbindung zwischen der Führungslage (2) und dem ersten flächigen Schutzelement (11) der Schutzabdeckung (1) eine stoffschlüssige Verbindung ist.

33. Airbageinrichtung nach Anspruch 32, **dadurch gekennzeichnet, dass** die dauerhafte Verbindung als eine Klebe- oder Schweißverbindung ausgebildet ist.

34. Airbageinrichtung nach einem der vorhergehenden Ansprüche, **dadurch gekennzeichnet, dass** die Airbageinrichtung als ein Frontairbagmodul ausgebildet ist.

35. Airbageinrichtung nach einem der vorhergehenden Ansprüche, **dadurch gekennzeichnet, dass** die Airbageinrichtung als ein Beifahrer-Airbagmodul ausgebildet ist.

## Claims

1. An airbag device for a motor vehicle comprising
- an airbag (G) which may be inflated to protect a vehicle occupant,
- a receptacle (M) in which the airbag (G) is arranged as an airbag package and which has an outlet opening through which the airbag (G) during inflation may emerge from the receptacle (M) and expand, and
- a flexible protective covering (1) which covers the airbag package in the region of the outlet opening, wherein
- the protective covering (1) comprising at least two flexible, plane protective elements (11, 12) which are respectively secured to the receptacle (M), which are connected to one another via at least one separable tearing line (10) and which flank the airbag (G) during inflation at least during a first period of time of the expansion of the airbag,
- between the protective covering (1) and the airbag (G) provided as an airbag package, a flexible guide layer (2) is arranged which is permanently connected to a first of the plane protective elements (11, 12), and wherein
- the first plane protective element (11) during inflation of the airbag (G) forms together with the guide layer (2) a composite layer (2, 11) flanking the airbag (G),
**characterized in that**
the guide layer (2) is permanently connected to the first plane protective element (11) along a connecting line, which extends along the tearing line (10), such that the composite layer (2, 11) has a greater surface area than the first plane protective element considered on its own when inflating the airbag (G).

2. The airbag device as claimed in claim 1, **characterized in that** the plane protective elements (11, 12) are secured to fastening portions (B1, B2) of the receptacle (M) which substantially oppose one another.

3. The airbag device as claimed in claim 1 or 2, **characterized in that** the plane protective elements (11, 12) are secured to the respectively associated fastening portion (B1, B2) of the receptacle (M) by an adhesive means (13a, 14a).

4. The airbag device as claimed in one of the preceding claims, **characterized in that** the at least one tearing line (10) of the protective covering (1) is configured such that the protective covering (1) during inflation and expansion of the airbag (G) is separated along the one tearing line (10) into separate plane protective elements (11, 12) which respectively flank the airbag (G) during expansion.

5. The airbag device as claimed in one of the preceding claims, **characterized in that** the guide layer (2) is connected at a first end portion (21) permanently to the first plane protective element (11).

6. The airbag device as claimed in one of the preceding claims, **characterized in that** the guide layer (2) adjacent to the tearing line (10) is permanently connected to the first plane protective element (11).

7. The airbag device as claimed in one of the preceding claims, **characterized in that** the guide layer (2) is additionally releasably fixed in the receptacle (M) via a fixing portion (22).

8. The airbag device as claimed in claim 7, **characterized in that** the fixing portion (22) is formed by a second end portion of the guide layer (2).

9. The airbag device as claimed in claim 7 or 8, **characterized in that** the additional releasable fixing of the guide layer (2) is provided on the protective covering (1).

10. The airbag device as claimed in claim 9, **characterized in that** the additional releasable fixing of the guide layer (2) is provided on a second plane protective element (12) of the protective covering (1) to which the guide layer (2) is not permanently connected.

11. The airbag device as claimed in one of claims 7 to 10, **characterized in that** the fixing portion (22) via which the guide layer (2) is releasably fixed in the receptacle (M), is spaced apart from the connecting portion (21), via which the guide layer (2) is permanently connected to the first plane protective element (11) of the protective covering (1).

12. The airbag device as claimed in one of claims 7 to 11, **characterized by** a releasable fixing of the fixing portion (22) of the guide layer (2) in the receptacle (M) such that the fixing portion (22) is released during inflation and expansion of the airbag (G) and forms a free end of the composite layer (2, 11) flanking the airbag (G).

13. The airbag device as claimed in claim 4 and 12, **characterized by** a configuration of the releasable fixing of the guide layer (2) such that the fixing portion (22) in the receptacle (M) is only released when the two plane protective elements (11, 12) have already been separated from one another along the tearing line (10) of the protective covering (1).

14. The airbag device as claimed in one of claims 7 to 13, **characterized in that**, for the releasable fixing of the guide layer (2), tearable fixing means are provided.

15. The airbag device as claimed in claim 14, **characterized in that** the tearable fixing means are formed by a tear seam.

16. The airbag device as claimed in claim 14, **characterized in that** the tearable fixing means are formed by an adhesive means.

17. The airbag device as claimed in one of claims 7 to 13, **characterized in that** positive fixing means (12a, 22a; 12b, 22b) are provided for the releasable fixing of the guide layer (2).

18. The airbag device as claimed in claim 17, **characterized in that** the fixing means comprise at least one tab (22a, 22b) penetrating a slot (12a, 12b).

19. The airbag device as claimed in claim 18, **characterized in that** the tab (22a) is non-positively held in a position, in which it penetrates the associated slot (12a).

20. The airbag device as claimed in claim 18, **characterized in that** the tab (22b) has a widened portion with which it positively engages behind the associated slot (12b) on its edge.

21. The airbag device as claimed in one of the preceding claims, **characterized in that** the guide layer (2) is permanently connected to the first plane protective element (11) such that the composite layer (2, 11) formed thereby and flanking the airbag (G) during inflation and expansion, faces an occupant to be protected by the airbag (G).

22. The airbag device as claimed in claim 21, **characterized in that** the composite layer (2, 11) is able to rest over a body part (K) of the occupant to be protected which is located during inflation of the airbag (G) close to the casing of the airbag (G).

23. The airbag device as claimed in one of the preceding claims, **characterized in that** the composite layer (2, 11) is entirely configured from one material.

24. The airbag device as claimed in one of the preceding claims, **characterized in that** the composite layer (2, 11) has on its surface facing the airbag (G) a friction-reducing coating.

25. The airbag device as claimed in one of the preceding claims, **characterized in that** the surface of the composite layer (2, 11) facing the airbag (G), during cooperation with the casing of the airbag (G) has a coefficient of friction of less than 0.1.

26. The airbag device as claimed in one of the preceding claims, **characterized in that**, during unfolding and expansion, the airbag (G) slides along the composite layer (2, 11) with its casing.

27. The airbag device as claimed in one of the preceding claims, **characterized in that** the guide layer (2) is folded between the airbag (G) provided as an airbag package and the protective covering (1).

28. The airbag device as claimed in one of the preceding claims, **characterized in that** the tearing line (10) is formed by a material weakness of the protective covering (1).

29. The airbag device as claimed in claim 28, **characterized in that** the tearing line (10) is formed by a perforation of the protective covering (1).

30. The airbag device as claimed in one of claims 1 to 27, **characterized in that** the tearing line (10) is formed by a separable connection of the plane protective elements (11, 12).

31. The airbag device as claimed in claim 30, **characterized in that** the tearing line (10) is formed by a tear seam.

32. The airbag device as claimed in one of the preceding claims, **characterized in that** the permanent connection between the guide layer (2) and the first plane protective element (11) of the protective covering (1) is a material connection.

33. The airbag device as claimed in claim 32, **characterized in that** the permanent connection is configured as a glued or welded connection.

34. The airbag device as claimed in one of the preceding claims, **characterized in that** the airbag device is configured as a front airbag module.

35. The airbag device as claimed in one of the preceding claims, **characterized in that** the airbag device is configured as a passenger airbag module.

## Revendications

1. Dispositif à airbag pour un véhicule automobile, comprenant
- un coussin gonflable (G) pour la protection d'un occupant du véhicule,
- un logement (M), dans lequel le coussin gonflable (G) est agencé sous forme de paquet de coussin et présentant une ouverture de sortie à travers laquelle le coussin gonflable (G) peut sortir hors du logement (M) lors du gonflage et se mettre en expansion, et
- une couverture de protection flexible (1) qui recouvre le paquet de coussin dans la zone de l'ouverture de sortie, dans lequel
- la couverture de protection (1) comprend au moins deux éléments protecteurs surfaciques flexibles (11, 12) qui sont fixés respectivement au niveau du logement (M), qui sont reliés l'un à l'autre via au moins une ligne de déchirure séparable (10) et qui flanquent le coussin gonflable (G) lors du gonflage au moins pendant une première phase temporelle de l'expansion du coussin gonflable,
- entre la couverture de protection (1) et le coussin gonflable (G) prévu sous forme de paquet de coussin est agencée une couche de guidage flexible (2) qui est reliée de façon durable avec un premier élément protecteur surfacique (11, 12), et dans lequel
- le premier élément protecteur surfacique (11) forme, lors du gonflage du coussin gonflable (G), ensemble avec la couche de guidage (2), une couche composite (2, 11) qui flanque le coussin gonflable (G),
**caractérisé en ce que**
la couche de guidage (2) est reliée de façon durable avec le premier élément protecteur surfacique (11) le long d'une ligne de liaison qui s'étend le long de la ligne de déchirure (10), de sorte que la couche composite (2, 11) présente, lors du gonflage du coussin gonflable, une superficie plus importante que le premier élément protecteur surfacique (11) pris en lui-même.

2. Dispositif à airbag selon la revendication 1, **caractérisé en ce que** les éléments protecteurs surfaciques (11, 12) sont fixés au niveau de portions de fixation (B1, B2) du logement (M) disposées essentiellement à l'opposé l'une de l'autre.

3. Dispositif à airbag selon la revendication 1 ou 2, **caractérisé en ce que** les éléments protecteurs surfaciques (11, 12) sont fixés par un agent collant (13a, 14a) au niveau de la portion de fixation respectivement associée (B 1, B2) du logement (M).

4. Dispositif à airbag selon l'une des revendications précédentes, **caractérisé en ce que** ladite au moins une ligne de déchirure (10) de la couverture de protection (1) est réalisée de telle sorte que, lors du gonflage et de l'expansion du coussin gonflable (G), la couverture de protection (1) est séparée le long de ladite ligne de déchirure (10) en éléments protecteurs surfaciques séparés (11, 12) qui flanquent respectivement le coussin gonflable (G) lors de son expansion.

5. Dispositif à airbag selon l'une des revendications précédentes, **caractérisé en ce que** la couche de guidage (2) est reliée de façon durable avec le premier élément protecteur surfacique (11) au niveau d'une première portion d'extrémité (21).

6. Dispositif à airbag selon l'une des revendications précédentes, **caractérisé en ce que** la couche de guidage (2) est reliée de façon durable avec le premier élément protecteur surfacique (11) au voisinage de la ligne de déchirure (10).

7. Dispositif à airbag selon l'une des revendications précédentes, **caractérisé en ce que** la couche de guidage (2) est additionnellement fixée de façon détachable dans le logement (M) via une portion de fixation (22).

8. Dispositif à airbag selon la revendication 7, **caractérisé en ce que** la portion de fixation (22) est formée par une seconde portion d'extrémité de la couche de guidage (2).

9. Dispositif à airbag selon la revendication 7 ou 8, **caractérisé en ce que** la fixation détachable additionnelle de la couche de guidage (2) est prévue au niveau de la couverture de protection (1).

10. Dispositif à airbag selon la revendication 9, **caractérisé en ce que** la fixation détachable additionnelle de la couche de guidage (2) est prévue au niveau d'un second élément protecteur surfacique (12) de la couverture de protection (1) avec lequel la couche de guidage (2) n'est pas reliée de façon durable.

11. Dispositif à airbag selon l'une des revendications 7 à 10, **caractérisé en ce que** la portion de fixation (22) via laquelle la couche de guidage (2) est fixée de façon détachable dans le logement (M), est à distance de la portion de liaison (21) via laquelle la couche de guidage (2) est reliée de façon durable avec le premier élément protecteur surfacique (11) de la couverture de protection (1).

12. Dispositif à airbag selon l'une des revendications 7 à 11, **caractérisé par** une fixation détachable de la portion de fixation (22) de la couche de guidage (2) dans le logement (M) de telle façon que la portion de fixation (22) se détache lors du gonflage et de l'expansion du coussin gonflable (G) et forme une extrémité libre de la couche composite (2, 11) qui flanque le coussin gonflable (G).

13. Dispositif à airbag selon la revendication 4 et 12, **caractérisé par** une réalisation de la fixation détachable de la couche de guidage (2) de telle façon que la portion de fixation (22) dans le logement (M) se détache uniquement quand les deux éléments protecteurs surfaciques (11, 12) ont déjà été séparés l'un de l'autre le long de la ligne de déchirure (10) de la couverture de protection (1).

14. Dispositif à airbag selon l'une des revendications 7 à 13, **caractérisé en ce qu'**il est prévu de moyens de fixation déchirables pour la fixation détachable de la couche de guidage (2).

15. Dispositif à airbag selon la revendication 14, **caractérisé en ce que** les moyens de fixation déchirables sont formés par un cordon à déchirer.

16. Dispositif à airbag selon la revendication 14, **caractérisé en ce que** les moyens de fixation déchirables sont formés par un agent collant.

17. Dispositif à airbag selon l'une des revendications 7 à 13, **caractérisé en ce qu'**il est prévu des moyens de fixation à coopération de formes (12a, 22a ; 12b, 22b) pour la fixation détachable de la couche de guidage (2).

18. Dispositif à airbag selon la revendication 17, **caractérisé en ce que** les moyens de fixation comprennent au moins une patte (22a, 22b) qui passe à travers une fente (12a, 12b).

19. Dispositif à airbag selon la revendication 18, **caractérisé en ce que** la patte (22a) est tenue par serrage dans une position dans laquelle elle traverse la fente associée (12a).

20. Dispositif à airbag selon la revendication 18, **caractérisé en ce que** la patte (22b) présente un élargissement au moyen duquel elle engage la fente associée (12b) par l'arrière au niveau de sa bordure par coopération de formes.

21. Dispositif à airbag selon l'une des revendications précédentes, **caractérisé en ce que** la couche de guidage (2) est reliée de manière durable avec le premier élément protecteur surfacique (11), de telle façon que la couche composite (2, 11) ainsi formée, qui flanque le coussin gonflable (G) lors du gonflage et de l'expansion, est orientée vers un occupant à protéger au moyen du coussin gonflable (G).

22. Dispositif à airbag selon la revendication 21, **caractérisé en ce que** la couche composite (2, 11) est capable de se poser sur une partie corporelle (K) de l'occupant à protéger, qui se trouve très proche de l'enveloppe du coussin gonflable (G) lors du gonflage du coussin gonflable (G).

23. Dispositif à airbag selon l'une des revendications précédentes, **caractérisé en ce que** la couche composite (2, 11) est réalisée complètement à partir d'un matériau.

24. Dispositif à airbag selon l'une des revendications précédentes, **caractérisé en ce que** la couche composite (2, 11) comporte un revêtement réducteur de friction sur sa surface orientée vers le coussin gonflable (G).

25. Dispositif à airbag selon l'une des revendications précédentes, **caractérisé en ce que** la surface de la couche composite (2, 11) orientée vers le coussin gonflable (G) présente, lors de la coopération avec l'enveloppe du coussin gonflable (G), un coefficient de friction inférieur à 0,1.

26. Dispositif à airbag selon l'une des revendications précédentes, **caractérisé en ce que** lors du déploiement et de l'expansion, le coussin gonflable (G) glisse avec son enveloppe le long de la couche composite (2, 11).

27. Dispositif à airbag selon l'une des revendications précédentes, **caractérisé en ce que** la couche de guidage (2) est posée en formant des plis entre le coussin gonflable (G) prévu sous forme de paquet de coussin et la couverture de protection (1).

28. Dispositif à airbag selon l'une des revendications précédentes, **caractérisé en ce que** la ligne de déchirure (10) est formée par un affaiblissement du matériau de la couche de protection (1).

29. Dispositif à airbag selon la revendication 28, **caractérisé en ce que** la ligne de déchirure (10) est formée par une perforation de la couverture de protection (1).

30. Dispositif à airbag selon l'une des revendications 1 à 27, **caractérisé en ce que** la ligne de déchirure (10) est formée par une liaison séparable des éléments protecteurs surfaciques (11, 12).

31. Dispositif à airbag selon la revendication 30, **caractérisé en ce que** la ligne de déchirure (10) est formée par un cordon à déchirer.

32. Dispositif à airbag selon l'une des revendications précédentes, **caractérisé en ce que** la liaison durable entre la couche de guidage (2) et le premier élément protecteur surfacique (11) de la couverture de protection (1) est une liaison par coopération de matières.

33. Dispositif à airbag selon la revendication 32, **caractérisé en ce que** la liaison durable est réalisée sous forme de liaison collée ou de liaison soudée.

34. Dispositif à airbag selon l'une des revendications précédentes, **caractérisé en ce que** le dispositif à airbag est réalisé sous forme de module d'airbag frontal.

35. Dispositif à airbag selon l'une des revendications précédentes, **caractérisé en ce que** le dispositif à airbag est réalisé sous forme de module d'airbag pour passager.
